# EUROPÄISCHE PATENTSCHRIFT

(11) **EP 0 877 289 B1**
(45) Veröffentlichungstag und Bekanntmachung des Hinweises auf die Patenterteilung: **16.07.2003**
(21) Anmeldenummer: 97107461.2
(22) Anmeldetag: 06.05.1997
(51) Int. Cl.: G03D 13/00, G03B 27/32

(54) **Fotografischer Printer**
Photographic printing apparatus
Dispositif d'impression photographique

(43) Veröffentlichungstag der Anmeldung: 11.11.1998
(73) Patentinhaber: IMIP LLC, Wilmington, Delaware 19801 (US)
(72) Erfinder: Heller, Martin, 8050 Zürich (CH); Knecht, Hugo, 8165 Schöfflisdorf (CH)
(74) Vertreter: Schwabe - Sandmair - Marx

(56) Entgegenhaltungen:
- EP-A- 0 601 193
- EP-A- 0 610 811
- US-A- 4 335 956
- PATENT ABSTRACTS OF JAPAN vol. 011, no. 162 (P-579), 26.Mai 1987 & JP 61 292642 A (KONISHIROKU PHOTO IND CO LTD), 23.Dezember 1986,
- PATENT ABSTRACTS OF JAPAN vol. 013, no. 527 (P-965), 24.November 1989 & JP 01 216356 A (FUJI PHOTO FILM CO LTD;OTHERS: 01), 30.August 1989,

## Beschreibung

Die Erfindung betrifft einen fotografischen Printer gemäss dem Oberbegriff des unabhängigen Anspruchs. Insbesondere betrifft die Erfindung eine Vorrichtung zur Herstellung von fotografischen Kopien, welche einen fotografischen Printer und einen daran angeschlossenen Papierprozessor enthält.

Um den chemischen Zustand der Behandlungsbäder von fotografischen Entwicklungsgeräten (Papierprozessoren) zu prüfen bzw. zu messen, stellen die Kopierpapierhersteller sog. Teststreifen in Form von Einzelblättern zur Verfügung. Diese Teststreifen sind bereits mit einem genau definierten Testmuster vorbelichtet. Für einen Chemie-Test wird ein solcher Teststreifen durch den Papierprozessor oder das gesamte Minilab transportiert, wobei in letzterem Fall natürlich im Printer keine Belichtung erfolgt. Anschliessend wird der entwickelte Teststreifen mit einem Farbmessgerät ausgemessen und so eine Aussage über den Zustand der Behandlungsbäder im Papierprozessor gewonnen.

Üblicherweise wird jeweils ein solcher Teststreifen in eine speziell dafür ausgebildete Kassette eingelegt, und die Kassette wird beim normalen Kopierpapiereingang des Printers bzw. Minilabs angedockt. Auf einen manuellen Steuerbefehl hin wird der Teststreifen motorisch aus der Kassette entnommen und in den normalen Papierpfad des Minilabs eingebracht und so dem Papierprozessor zugeführt.

Bei dieser Vorgehensweise muss also bei jedem Chemie-Test die den Kopierpapiervorrat enthaltende Papierkassette abgedockt und stattdessen die Teststreifen-Kassette angedockt werden und umgekehrt. Die Durchführung eines Chemie-Tests ist auf diese Weise relativ umständlich und unbequem.

Durch die vorliegende Erfindung sollen die apparativen Voraussetzungen dafür geschaffen werden, dass die Überprüfung des chemischen Zustands von Behandlungsbädern in einem einem fotografischen Printer nachgeschaltenten Entwicklungsgerät einfacher und bequemer durchgeführt werden kann.

Die Lösung dieser der Erfindung zugrundeliegenden Aufgabe ergibt sich durch die Ausstattung eines gattungsgemässen fotografischen Printers mit den im kennzeichnenden Teil des unabhängigen Anspruchs 1 beschriebenen Merkmalen. Besonders vorteilhafte Ausgestaltungen und Weiterbildungen sind Gegenstand der Ansprüche 2-4.

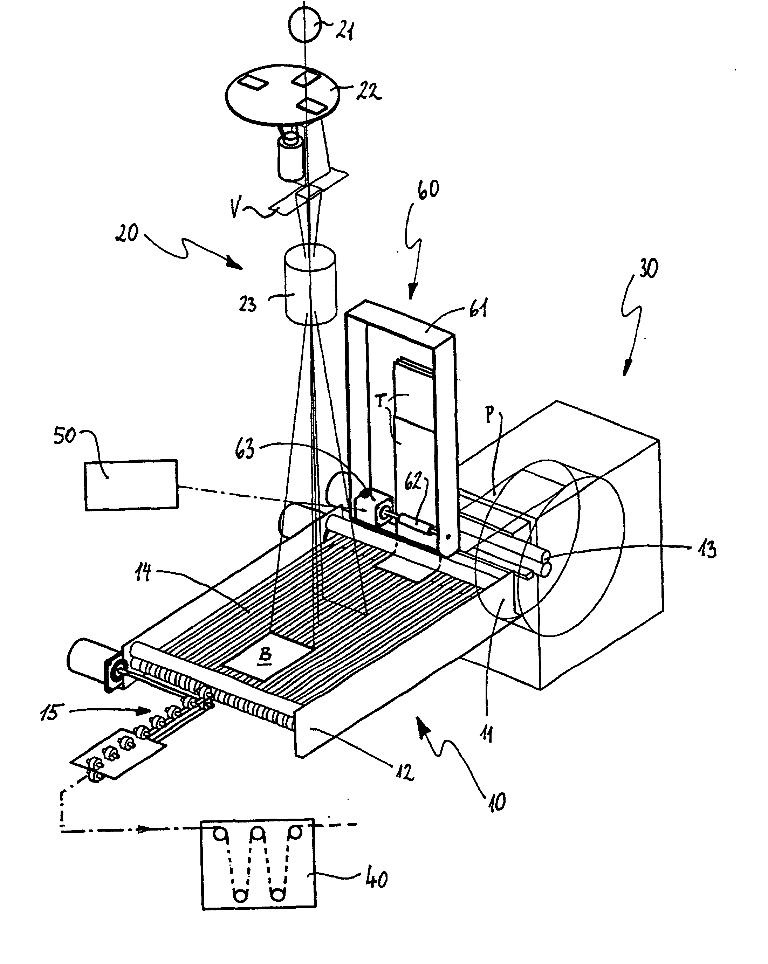

Im folgenden wird die Erfindung anhand der Zeichnung näher erläutert. Die einzige Figur zeigt eine schematische Darstellung der für das Verständnis der Erfindung relevanten Teile eines Ausführungsbeispiels des erfindungsgemässen fotografischen Printers.

Der dargestellte fotografische Printer umfasst im wesentlichen eine Papierbühne 10 mit einer Zufuhrseite 11 und einer Abführseite 12 sowie (hier) oberhalb der Papierbühne angeordnete Belichtungsmittel 20 zur einer Kopiervorlage V entsprechenden bildmässigen Belichtung von auf der Papierbühne befindlichem, unbelichtetem fotografischen Blattmaterial B. Die Belichtungsmittel 20 umfassen eine Kopierlichtquelle 21, symbolisch als Filterrad 22 dargestellte Mittel zur Einfärbung des Kopierlichts und ein Abbildungsobjektiv 23.

Auf der Zufuhrseite 11 der Papierbühne 10 befinden sich eine an- und abdockbare Papierkassette 30 mit einem Vorrat an unbelichtetem fotografischen Kopierpapier P sowie erste Transportmittel 13, welche Kopierpapier aus der Papierkassette 30 ausziehen, Blätter der jeweils erforderlichen Länge abschneiden und diese Blätter B der Papierbühne 10 zuführen. In der Papierbühne 10 befinden sich zweite Transportmittel 14, welche das ihr zugeführte Blattmaterial B über die Papierbühne von der Zuführseite 11 zur Abfuhrseite 12 transportieren. Auf der Abfuhrseite 12 der Papierbühne 10 befinden sich dritte Transportmittel 15, welche das nach dem Durchlaufen der Papierbühne belichtete Blattmaterial B von der Papierbühne übernehmen und einem an den Printer nachgeschalteten Papierprozessor 40 zuführen. Eine Steuerung 50 arbeitet mit den Transportmitteln 13-15 und den Belichtungsmitteln 20 zusammen und steuert deren Funktionen.

Soweit entspricht der dargestellte fotografische Printer vollumfänglich herkömmlichen, für Einzelblattverarbeitung geeigneten Printern, wie sie insbesondere in sog. Minilabs eingesetzt werden, so dass sich soweit eine nähere Erläuterung für den Fachmann erübrigt.

Gemäss dem grundlegenden Gedanken der Erfindung ist der Printer zusätzlich noch mit einer Zuführvorrichtung 60 für vorbelichtetes fotografisches Blattmaterial (Teststreifen) T ausgestattet. Diese Zuführvorrichtung 60 ist an der Zuführseite 11 oberhalb der Papierbühne 10 angeordnet und dazu ausgebildet, in Zusammenarbeit mit der Steuerung 50 auf einen entsprechenden Auslösebefehl hin ein einzelnes Blatt T des vorbelichteten fotografischen Blattmaterials, also einen Teststreifen, auf die Papierbühne 10 zu führen, so dass das Blatt von den zweiten Transportmittlen 14 erfasst und wie die unbelichteten Einzelblätter B des Kopierpapiers weitertransportiert werden kann.

Die an den Printer lösbar angedockte Zuführvorrichtung 60 umfasst eine Kassette 61, welche mehrere, beispielsweise etwa 20 Teststreifen T aufzunehmen imstande ist, sowie eine durch eine Transportwalze 62 und einen Antriebsmotor 63 gebildete Ausgabevorrichtung, welche gesteuert durch die Steuerung 50 jeweils einen einzelnen Teststreifen T aus der Kassette 61 auswirft und der Papierbühne 10 zuführt.

Wenn die Chemie des dem Printer nachgeschalteten Papierprozessors 40 getestet werden soll, teilt dies die Bedienungsperson der Steuerung 50 durch Eingabe eines entsprechenden Befehls z.B. durch Drücken einer dafür vorgesehenen Taste mit. Die Steuerung 50 löst dann die Ausgabe eines Teststreifens T aus der Zufiihrvorrichtung 60 aus. Der Teststreifen T wird (ohne Belichtung) über die Papierbühne 10 transportiert und dem nachgeschalteten Papierprozessor 40 zugeführt. Nach dem Verlassen des Papierprozessors wird der entwickelte Teststreifen in üblicher Weise mittels eines Farbmessgeräts ausgemessen und anhand der Messergebnisse eine Aussage über den Zustand der Chemie gewonnen.

Durch die erfindungsgemäss zusätzlich vorgesehene Zuführvorrichtung für Teststreifen erübrigt sich das Abdocken der Papierkassette für einen Chemie-Test, so dass solche Chemie-Tests gegenüber dem Stand der Technik wesentlich einfacher und bequemer durchführbar sind.

## Patentansprüche

1. Fotografischer Printer mit einer eine Zufuhrseite (11) und eine Abführseite (12) aufweisenden Papierbühne (10), ersten Transportmitteln (13) zum Zuführen von unbelichtetem fotografischen Blattmaterial (B) auf die Zufuhrseite der Papierbühne, zweiten Transportmitteln (14) zum Bewegen des Blattmaterials über die Papierbühne von der Zuführseite zur Abführseite und dritten Transportmitteln (15) zum Entnehmen des Blattmaterials auf der Abführseite der Papierbühne, sowie mit Belichtungsmitteln (20) zum bildmässigen Belichten von auf der Papierbühne befindlichem Blattmaterial (B) und mit einer Steuerung (50), welche mit den Transportmitteln (13-15) und den Belichtungsmitteln (20) zusammenarbeitet und diese steuert, **dadurch gekennzeichnet, dass** auf der Zuführseite (11) der Papierbühne (10) eine mit der Steuerung (50) zusammenarbeitende Zuführvorrichtung (60) für vorbelichtetes fotografisches Blattmaterial (T) vorgesehen ist, und dass die Steuerung (50) dazu ausgebildet ist, die Zuführvorrichtung (60) zur Zuführung eines Blatts des vorbelichteten Blattmaterials (T) auf die Papierbühne (10) zu veranlassen.

2. Printer nach Anspruch 1, **dadurch gekennzeichnet, dass** die Zuführvorrichtung (60) eine Kassette (61) zur Aufnahme vorzugsweise mehrerer Blätter von vorbelichtetem Blattmaterial (T) sowie mit der Steuerung (50) zusammenarbeitende motorische Ausgabemittel (62,63) zum Ausgeben jeweils eines einzelnen Blatts des vorbelichteten Blattmaterials (T) auf die Papierbühne (10) umfasst.

3. Printer nach Anspruch 2, **dadurch gekennzeichnet, dass** die Kassette (61) lösbar an den Printer angedockt ist.

4. Vorrichtung zur Herstellung von fotografischen Kopien mit einem gemäss einem der voranstehenden Ansprüche ausgebildeten fotografischen Printer (10,20,30,50,60) und einem daran angeschlossenen Papierprozessor (40).

## Claims

1. A photographic printer with a paper platform (10) having a feed side (11) and a delivery side (12), a first transport means (13) for feeding unexposed photographic sheet material (B) to the feed side of the paper platform, a second transport means (14) for moving the sheet material across the paper platform from the feed side to the delivery side and a third transport means (15) for removing the sheet material at the delivery side of the paper platform and with an exposure means (20) for exposing the sheet material (B) located on the paper platform thereby producing an image and a control unit (50) which works together with the transport means (13 to 15) and the exposure means (20) and controls them, **characterized in that** provided on the feed side (11) of the paper platform (10) is a feed device (60) for pre-exposed photographic sheet material (T) which works together with the control unit (50), and that the control unit (50) is designed to cause the feed device (60) to feed a sheet of the pre-exposed sheet material (T) onto the paper platform (10).

2. A printer according to claim 1, **characterized in that** the feed device (60) comprises a cassette (61) for receiving preferably several sheets of pre-exposed sheet material (T) and a delivery means (62, 63) powered by a motor which works together with the control unit (50) to deliver a single sheet of the pre-exposed sheet material (T) to the paper platform (10).

3. A printer according to claim 2, **characterized in that** the cassette (61) is attached to the printer in such a manner that it can be detached.

4. A device for the production of photographic copies with a photographic printer (10, 20, 30, 50, 60) according to one of the preceding claims and a connected paper processor (40).

## Revendications

1. Dispositif d'impression photographique comportant un porte-papier (10) comportant un côté amenée (11) et un côté évacuation (12), des premiers moyens de transport (13) pour l'amenée d'un matériau en feuille photographique (B) non exposé sur le côté amenée du porte-papier, des deuxièmes moyens de transport (14) pour le déplacement du matériau en feuille sur le porte-papier du côté amenée vers le côté évacuation et des troisièmes moyens de transport (15) pour enlever le matériau en feuille sur le côté évacuation du porte-papier, ainsi que des moyens d'insolation (20) pour l'insolation des images du matériau en feuille (B) se trouvant sur le porte-papier et comportant une commande (50) qui coopère avec les moyens de transport (13-15) et les moyens d'insolation (20) et commande ceux-ci, **caractérisé en ce que** sur le côté amenée (11) du porte-papier (10) est prévu un dispositif d'amenée (60) coopérant avec la commandé (50) pour le matériau en feuille photographique (T) pré-insolé, et **en ce que** la commande (50) est conçue pour faire en sorte que le dispositif d'amenée (60) amène une feuille du matériau en feuille (T) pré-insolé sur le porte-papier (10).

2. Dispositif d'impression selon la revendication 1, **caractérisé en ce que** le dispositif d'amenée (60) comprend une cassette (61) pour recevoir de préférence plusieurs feuilles d'un matériau en feuille (10) pré-insolé, ainsi que des moyens motorisés de distribution (62, 63) coopérant avec la commande (50) pour distribuer une seule feuille du matériau en feuille (T) pré-insolé sur le porte-papier (10).

3. Dispositif d'impression selon la revendication 2, **caractérisé en ce que** la cassette (61) est attachée de manière séparable au dispositif d'impression.

4. Dispositif pour réaliser des copies photographiques avec un dispositif d'impression photographique (10, 20, 30, 50, 60) conçue suivant l'une des revendications précédentes, et un processeur papier (40) connecté à celle-ci.
